# EUROPÄISCHE PATENTSCHRIFT

(11) **EP 2 153 989 B1**
(45) Veröffentlichungstag und Bekanntmachung des Hinweises auf die Patenterteilung: **29.09.2021**
(21) Anmeldenummer: 09166301.3
(22) Anmeldetag: 24.07.2009
(51) Int. Cl.: B32B 27/30, B32B 17/10, B32B 27/20, B32B 27/22

(54) **Mehrschichtfolien aus weichmacherhaltigem Polyvinylacetal mit schalldämpfenden Eigenschaften**
Multi-layer films from polyvinylacetal containing plactisizer with sound absorbing characteristics
Feuilles multicouche constituées de polyvinylacétal comprenant du plastifiant ayant des propriétés d'isolation acoustique

(30) Priorität: 01.08.2008 EP 08104948
(43) Veröffentlichungstag der Anmeldung: 17.02.2010
(73) Patentinhaber: Kuraray Europe GmbH, 65795 Hattersheim (DE)
(72) Erfinder: Steuer, Martin, Dr., D-65835, Liederbach (DE); Beekhuizen, Jan, Dr., 53844, Troisdorf (DE); Keller, Uwe, Dr., D-53177, Bonn (DE); Isoue, Koichiro, Kurashiki Okayama 710-0801 (JP)
(74) Vertreter: Janßen, Christian Oliver

(56) Entgegenhaltungen:
- WO-A-2006/018419
- WO-A-2006/102049
- JP-A- H07 206 483
- JP-A- 2007 331 959
- JP-A- 2007 331 964
- US-A- 5 340 654
- US-A1- 2007 014 976
- US-A1- 2007 231 584

## Beschreibung

### Technisches Gebiet

Die Erfindung betrifft eine als Zwischenschicht in Verbundsicherheitsgläsern geeignete weichmacherhaltige Folie, die aus mindestens zwei Teilfolien auf der Basis von weichmacherhaltigen Polyvinylacetalen mit unterschiedlichem Polyvinylacetatanteil aufgebaut ist und Dämpfungseigenschaften für Schall aufweist.

### Stand der Technik

Verbundsicherheitsgläser bestehen im Allgemeinen aus zwei Glasscheiben und einer die Glasscheiben verbindenden Zwischenfolie. Als Folienmaterial wird überwiegend weichmacherhaltiger teilacetalisierter Polyvinylalkohol (Polyvinylacetal), insbesondere Polyvinylbutyral (PVB) verwendet. Verbundsicherheitsgläser (VSG) werden beispielsweise als Windschutzscheiben oder Seitenverglasungen im Kraftfahrzeugbereich sowie als Sicherheitsverglasung im Baubereich eingesetzt.

Ein immer wichtiger werdendes Merkmal von Verbundverglasungen sind deren schalldämmende Eigenschaften. Dies kann z.B. durch eine besonders weiche und damit schallabsorbierende Zwischenschichtfolie erreicht werden. Diese Folien sind aber mechanisch oft nicht ausreichend stabil oder weisen keine ausreichenden Haftungseigenschaften an Glas auf.

Alternativ können Mehrschichtsysteme eingesetzt werden, wobei sich die Teilschichten in ihren mechanischen Festigkeiten unterscheiden und so durch mechanische Entkopplung eine Schalldämmung erreicht wird.

Unterschiedliche mechanische Festigkeiten von Folien basierend auf weichmacherhaltigem Polyvinylacetal können z.B. durch deren Weichmachergehalt oder den Anteil an Polyvinylalkohol- oder Polyvinylacetatgruppen im eingesetzten Polyvinylacetal eingestellt werden.

So beschreibt z.B. US 5,340,654 ein Mehrschichtsystem, bei dem eine Schicht ein PVB mit einem Restacetatgehalt von 8 bis 30 Mol% und eine zweite Schicht ein PVB mit einem Restacetatgehalt von weniger als 4 Mol% enthält. US 5,340,654 weist darauf hin, das PVB mit einem Restacetatgehalt von weniger als 8 Mol% zur Schalldämmung ungeeignet ist.

WO 2006/102049 offenbart ein ähnliches Mehrschichtsystem, bei dem beide PVB-Teilfolien einen Restacetatgehalt von weniger als 5 Mol%, unterschiedliche Anteile an Polyvinylalkoholgruppen bzw. einen unterschiedlichen Weichmachergehalt und damit unterschiedliche mechanische Festigkeiten aufweisen.

JP H07 206483 A offenbart eine Zwischenschichtfolie für Verbundverglasungen, aufgebaut aus mindestens zwei Teilfolien basierend auf weichmacherhaltigem Polyvinylacetal, wobei eine Teilfolie ein Polyvinylacetal mit einem Anteil an Polyvinylacetatgruppen von 5 bis 8 Mol% und eine Teilfolie ein Polyvinylacetal mit einem Anteil an Polyvinylacetatgruppen s; 4 Mol% enthält.
JP 2007 331964 A offenbart eine Zwischenschichtfolie für Verbundverglasungen, aufgebaut aus mindestens zwei Teilfolien basierend auf weichmacherhaltigem Polyvinylacetal, wobei eine Teilfolie ein Polyvinylacetal mit einem Anteil an Polyvinylacetatgruppen von kleiner oder gleich 7 Mol% und eine Teilfolie ein Polyvinylacetal mit einem Anteil an Polyvinylacetatgruppen kleiner oder gleich 4 Mol% enthält.

Die Herstellung des für Zwischenschichtfolien üblicherweise eingesetzten Polyvinylbutyrals erfolgt im industriellen Maßstab durch Verseifung von Polyvinylacetat zu Polyvinylalkohol mit einem gewünschten Restacetatgehalt und dessen nachfolgende Umsetzung mit einem Aldehyd zum entsprechenden Polyvinylacetal mit dem gewünschten Acetalisierungsgrad.

Polyvinylalkohol wird aus Polyvinylacetat durch direkte Hydrolyse oder durch Alkoholyse hergestellt. Die Reaktion kann durch starke Säuren oder Basen katalysiert werden (vgl. Encyclopedia of Polymer Science and Engineering, Wiley, New York 1989, Vol 17). Im industriellen Maßstab ist die Alkoholyse von Polyvinylacetat mit Methanol unter alkalischer Katalyse unter Bildung von Methylacetat und Polyvinylalkohol bevorzugt. Überschüssiges Lösungsmittel sowie Methylacetat werden nach Erreichung des angestrebten Hydrolysegrades abdestilliert. Der Hydrolysegrad des Polyvinylalkohols kann über Verweilzeit, Katalysatorkonzentration und Temperatur eingestellt werden. Die Herstellungskosten von Polyvinylalkohol nehmen generell mit steigendem Hydrolysegrad zu, da zum Einen die Ausbeute an Polyvinylakohol bezogen auf Polyvinylacetat abnimmt und zum Anderen Katalysatormenge, Verweilzeit sowie die Menge der zu destillierenden Lösungsmittel zunimmt.

Je höher der Hydrolysegrad des Polyvinylalkohols, desto höher sind auch die Prozesskosten bei Herstellung eines Polyvinylacetals. Dies liegt zum Einen an den mit dem Hydrolysegrad steigenden Kosten des Polyvinylalkohols selbst (siehe vorigen Abschnitt). Zum Anderen nimmt die erforderliche Menge an Aldehyd zur Erreichung eines vorgegebenen Gehalts an OH-Gruppen (ausgedrückt als Polyvinylalkoholgehalt des Polyvinylacetals in Gewichtsprozent) mit dem Hydrolysegrad zu. Die im Stand der Technik für Mehrschichtfolien beschriebenen Systeme enthalten Polyvinylacetale mit niedrigem Restacetatgehalt, d.h. die Polyvinylacetale werden aus hochverseiften Polyvinylalkoholen hergestellt. Dies ist aus den o.g. energetischen und ökonomischen Gründen ungünstig.

Aufgabe der vorliegenden Erfindung war es daher, Zwischenschichtfolien für Verbundverglasungen mit schalldämmenden Eigenschaften herzustellen, die durch die Auswahl der eingesetzten weichmacherhaltigen Polyvinylacetale preisgünstig herzustellen sind und dennoch eine gute Schalldämmung aufweisen.

Es wurde gefunden, dass Zwischenschichtfolien auf Basis von weichmacherhaltigem Polyvinylacetal, die eine Teilschicht aus Standard-PVB und zumindest eine Teilschicht aus Polyvinylacetal mit mittlerem Restacetatgehalt enthält, preisgünstig herzustellen sind und entgegen der Information aus US 5,340,654 ausreichende Dämpfungseigenschaften aufweisen.

Gegenstand der vorliegenden Erfindung sind daher Zwischenschichtfolien für Verbundverglasungen, aufgebaut aus mindestens zwei Teilfolien basierend auf weichmacherhaltigem Polyvinylbutyral, wobei die erste Teilfolie ein Polyvinylbutyral mit einem Anteil an Polyvinylacetatgruppen von 0,1 bis 11 Mol%, bevorzugt 0,1 - 4 Mol%, besonders bevorzugt 0,1 - 2 Mol% und mit einem Anteil an Polyvinylalkoholgruppen von 17-22 Gew.% enthält und die zweite Teilfolie ein Polyvinylbutyral mit einem Anteil an Polyvinylacetatgruppen zwischen 5 und 8 Mol%, bevorzugt zwischen 5 und 7,9 Mol%, besonders bevorzugt zwischen 5 und 7,5 Mol% insbesondere zwischen 5 und 7,5 Mol%, oder zwischen 5,3 und 7,2 Mol% und mit einem Anteil an Polyvinylalkoholgruppen von 11,5 - 13 Gew.% enthält.

Die Bestimmung der Dämpfungseigenschaften erfolgt gemäß ISO/PAS 16940 (Stand 16.7.2002) an einem Testkörper aus einer 0,8 mm dicken Zwischenschichtfolie, die zwischen zwei 2 mm dicken Glasscheiben laminiert wurde. Es wurde jeweils die 1. Mode bestimmt.

Die Schalldämmungswirkung der erfindungsgemäßen Folien sollte bei den Anwendungstemperaturen des späteren Glaslaminats am höchsten sein. Bei Automobilverglasungen liegen die Anwendungstemperaturen bei ca. 20 °C, da die Scheibe im Winter geheizt und im Sommer durch Klimaanlagen gekühlt wird. Erfindungsgemäße Folien weisen in der genannten Messanordnung bevorzugt im Temperaturbereich von 17,5-22,5°C maximale Dämpfung auf, hier insbesondere Dämpfungswerte von über 22%, bevorzugt von über 23% und besonders bevorzugt von über 24%.

Bevorzugt weisen die erfindungsgemäßen Folien in einem 2 mm Glas/ 0,8 mm Folie/ 2 mm Glas-Laminat gemessen gemäß ISO/PAS 16940 (Stand 16.7.2002) für die 1. Mode Dämpfungswerte bei 10 °C von über 10 %, bei 15 °C von über 10 % und bei 20 °C von über 21 % auf.

Die erfindungsgemäß eingesetzten Teilfolien können jeweils in nahezu beliebiger Dicke verwendet werden, sofern sich die Schallschutzeigenschaften nicht negativ verändern. So können alle Teilfolien die gleiche Dicke aufweisen, es sind aber auch Kombinationen von Teilfolien unterschiedlicher Dicke möglich. Bei der bevorzugten Anordnung der erfindungsgemäßen Zwischenschichtfolie als Dreifachverbund A/B/A besitzen die außen liegenden Folien A weitgehend die gleiche Dicke, während die schalldämmende Folie B so dünn wie möglich sein kann. So kann die schalldämmende Folie B z.B. bei einer Gesamtdicke der Folie von 0,76 mm eine Dicke von 0,075 bis 0,15 mm besitzen. Erfindungsgemäße Mehrschichtfolien weisen bevorzugt die industriell üblichen Gesamtdicken von z.B. 0,38, 0,76, 1,14 mm (d.h. Vielfache von 0,38 mm) auf.

Die erfindungsgemäßen Teilfolien enthalten weichmacherhaltige Polyvinylbutyrale, die durch Acetalisierung eines ganz oder teilweise verseiften Polyvinylalkohols mit einem Butyraldehyd erhalten werden. Die erste Teilfolie weist ein Polyvinylbutyral mit einem Anteil an Polyvinylalkoholgruppen von 17-22 Gew.%, bevorzugt von 18-21 Gew.% und besonders bevorzugt von 19,5-20,5 Gew.%. auf.

Allgemein sinkt die Verträglichkeit von Weichmacher und teilacetalisiertem Polyvinylalkohol mit der Abnahme des polaren Charakters des Weichmachers. So sind Weichmacher höherer Polarität mit Polyvinylacetal besser verträglich als solche mit niedrigerer Polarität. Alternativ steigt die Verträglichkeit von Weichmachern geringer Polarität mit Zunahme des Acetalysierungsgrades, d.h. mit Abnahme der Anzahl an Hydroxygruppen und damit der Polarität des Polyvinylbutyral. Auf Grund der unterschiedlichen Anteile an PolyvinylalkoholGruppen können die Teilfolien unterschiedliche Mengen von Weichmachern aufnehmen, ohne dass es zum Ausschwitzen des Weichmachers kommt. Bevorzugt weisen die Teilfolien daher einen um mindestens 5 Gew.%, besonders bevorzugt mindestens 7,5 Gew.% und insbesondere einen um mindestens 10 Gew.% unterschiedlichen Weichmacheranteil bezogen auf die Folienformulierung auf.

Die Teilfolien können gleiche oder unterschiedliche Weichmacher enthalten. Bevorzugt ist der Einsatz von gleichen Weichmachern, wobei sich die Zusammensetzung von Weichmachermischungen in den Teilfolien durch Migration geringfügig ändern kann.

Die Teilfolien können Weichmacher oder Weichmachermischungen aus mindestens einem der folgenden, für PVB-Folie bekannten Weichmacher enthalten:
- Ester von mehrwertigen aliphatischen oder aromatischen Säuren, z.B. Dialkyladipate wie Dihexyladipat, Dioctyladipat, Hexylcyclohexyladipat, Mischungen aus Heptyl- und Nonyladipaten, Diisononyladipat, Heptylnonyladipat sowie Ester der Adipinsäure mit cycloaliphatischen oder Etherbindungen enthaltenden Esteralkoholen, Dialkylsebazate wie Dibutylsebazat sowie Ester der Sebazinsäure mit cycloaliphatischen oder Etherbindungen enthaltenden Esteralkoholen, Estern der Phthalsäure wie Butylbenzylphthalat oder Bis-2-butoxyethylphthalat, Estern der Cyclohexandicarbonsäure wie etwa 1,2-Cyclohexandicarbonsäurediisononylester
- Ester oder Ether von mehrwertigen aliphatischen oder aromatischen Alkoholen oder Oligoetherglykolen mit einem oder mehreren unverzweigen oder verzweigten aliphatischen oder aromatischen Substituenten, wie z.B. Estern von Di-, Tri- oder Tetraglykolen mit linearen oder verzweigten aliphatischen oder cycloaliphatischen Carbonsäuren; Als Beispiele für letztere Gruppe können dienen Diethylenglykol-bis-(2-ethylhexanoat), Triethylenglykol-bis-(2-ethyl-hexanoat), Triethylenglykol-bis-(2-ethylbutanoat), Tetraethylenglykol-bis-n-heptanoat, Triethylenglykol-bis-n-heptanoat, Triethylenglykol-bis-n-hexanoat, Tetraethylenglykoldimethylether und/oder Dipropylenglykolbenzoat
- Phosphate mit aliphatischen oder aromatischen Esteralkoholen wie z.B. Tris(2-ethylhexyl)phosphat (TOF), Triethylphosphat, Diphenyl-2-ethylhexylphosphat, und/oder Trikresylphosphat
- Ester der Zitronensäure, Bernsteinsäure und/oder Fumarsäure Besonders bevorzugt werden einer oder mehrere der folgenden Weichmacher verwendet:
   - Di-2-ethylhexylsebacat (DOS), Di-2-ethylhexyladipat (DOA), Dihexyladipat (DHA), Dibutylsebacat (DBS), Triethylenglykol-bis-n-heptanoat (3G7), Tetraethylenglykol-bis-n-heptanoat (4G7), Triethylenglykol-bis-2-ethylhexanoat (3GO bzw. 3G8) Tetraethylenglykol-bis-n-2-ethylhexanoat (4GO bzw. 4G8), Di-2-butoxyethyladipat (DBEA), Di-2-butoxyethoxyethyladipat (DBEEA), Di-2-butoxyethylsebacat (DBES), Di-2-ethylhexylphthalat (DOP), Di-isononylphthalat (DINP), Triethylenglykol-bis-isononanoat, Triethylenglykol-bis-2-propylhexanoat, 1,2-Cyclohexandicarbonsäurediisononylester (DINCH), Tris(2-ethylhexyl)phosphat (TOF) und Dipropylenglykolbenzoat

Zusätzlich können die erfindungsgemäßen Teilfolien weitere, dem Fachmann bekannte Zusätze enthalten wie Restmengen an Wasser, UV-Absorber, Antioxidantien, Haftungsregulatoren, optische Aufheller, Stabilisatoren, Farbmittel, Verarbeitungshilfsmittel, organische oder anorganische Nanopartikel, pyrogene Kieselsäure und/oder oberflächenaktive Stoffe.

In einer Variante der Erfindung weisen alle Teilfolien die genannten Additive in weitgehend der gleichen Konzentration auf. In einer besonderen Variante der Erfindung weist zumindest eine der Teilfolien keine Haftungsregulatoren (Antihaftmittel) auf. Als Antihaftmittel werden im Rahmen der vorliegenden Erfindung Verbindungen verstanden, mit der die Haftung von weichmacherhaltigen Polyvinylacetalfolien an Glasoberflächen eingestellt werden kann. Verbindungen dieser Art sind dem Fachmann bekannt; in der Praxis werden hierzu häufig Alkali- oder Erdalkalimetallsalze von organischen Säuren, wie z.B. Kalium/Magnesiumacetat eingesetzt.

Es ist ebenso möglich, dass mindestens eine der Teilfolien zur Verbesserung der Steifigkeit 0,001 bis 20 Gew.% SiO₂, bevorzugt 1 bis 15 Gew.%, insbesondere 5 bis 10 Gew.%, ggf. gedopt mit Al2O3 oder ZrO2 enthält.

Damit die erfindungsgemäßen Zwischenschichtfolien verbesserte Dämpfungseigenschaften aufweisen, besitzen die in den unterschiedlichen Teilfolien für die Erfindung verwendbaren Polyvinylbutyrale bevorzugt unterschiedliche Glasübergangstemperaturen (Tg). Die Glasübergangstemperatur des Polyvinylbutyrals in der ersten Teilfolie ist bevorzugt größer als 70°C. Die Glasübergangstemperatur des Polyvinylbutyrals in der zweiten Teilfolie mit Dämmwirkung ist hiervon unabhängig bevorzugt kleiner 70 °C, bevorzugt im Bereich 64 - 69 °C.

Zur Herstellung von Polyvinylbutyral wird Polyvinylalkohol in Wasser gelöst und mit Butyraldehyd unter Zusatz eines Säurekatalysators acetalysiert. Das ausgefallene Polyvinylbutyrals wird abgetrennt, neutral gewaschen, ggf. in einem alkalisch eingestellten wässrigen Medium suspendiert, danach erneut neutral gewaschen und getrocknet.

Der Polyvinylalkoholgehalt des Polyvinylbutyrals kann durch die Menge des bei der Acetalisierung eingesetzten Aldehyds eingestellt werden. Es ist auch möglich, die Acetalisierung mit anderen oder mehreren Aldehyden mit 2-10 Kohlenstoffatomen (z.B. Valeraldehyd) durchzuführen.

Die auf weichmacherhaltigem Polyvinylbutyral basierenden Folien enthalten bevorzugt unvernetztes Polyvinylbutyral (PVB). Der Einsatz von vernetztem Polyvinylbutyral (PVB) ist ebenso möglich. Geeignete vernetzte Polyvinylbutyrale sind z.B. in EP 1527107 B1 und WO 2004/063231 A1 (thermische Selbstvernetzung von Carboxylgruppenhaltigen Polyvinylacetalen), EP 1606325 A1 (mit Polyaldehyden vernetzte Polyvinylacetale) und WO 03/020776 A1 (mit Glyoxylsäure vernetzte Polyvinylacetale) beschrieben.

Als Polyvinylalkohol können im Rahmen der vorliegenden Erfindung auch Terpolymere aus hydrolysierten Vinylacetat/Ethylen-Copolymeren eingesetzt werden. Diese Verbindungen sind in der Regel zu mehr als 92 Mol% hydrolysiert und enthalten 1 bis 10 Gew.% auf Ethylen basierende Einheiten (z.B. Typ "Exceval" der Kuraray Europe GmbH).
Als Polyvinylalkohol können im Rahmen der vorliegenden Erfindung weiterhin auch hydrolysierte Copolymere aus Vinylacetat und mindestens einem weiteren ethylenisch ungesättigten Monomer eingesetzt werden.
Die Polyvinylalkohole können im Rahmen der vorliegenden Erfindung rein oder als Mischung von Polyvinylalkoholen mit unterschiedlichem Polymerisationsgrad oder Hydrolysegrad eingesetzt werden. Es ist möglich, dass die erfindungsgemäßen Zwischenschichtfolien aus 2, 3, 4 oder 5 Teilfolien bestehen, wobei die jeweils benachbarten Teilfolien die genannten unterschiedlichen Eigenschaften aufweisen.

Bevorzugt weisen die erfindungsgemäßen Folien drei Teilfolien auf, wobei die erste und die dritte Teilfolie identisch sind. Insbesondere bevorzugt ist der Einsatz von einer weichen Folie enthaltend Polyvinylbutyral mit einem Anteil an Polyvinylacetatgruppen zwischen 5 und 8 Mol%, die zwischen zwei Folien enthaltend Polyvinylbutyral mit einem Anteil an Polyvinylacetatgruppen von 0,1 bis 11 Mol%, bevorzugt 0,1 - 4 Mol%, besonders bevorzugt 0,1 - 2 Mol% angeordnet ist.

Dies hat den Vorteil, dass in einem entsprechenden Glas/Glaslaminat die zum Glas gerichteten Seiten der Mehrschichtfolie gleiche Haftungseigenschaften aufweisen. Die mittlere Folie gilt im Rahmen der vorliegenden Erfindung dann als zweite Teilfolie und weist die genannten Eigenschaften auf. Zur Herstellung der erfindungsgemäßen Folien können die Teilfolien zunächst einzeln durch Extrusion hergestellt und anschließend mechanisch z.B. durch gemeinsames Aufrollen auf einen Folienwickel zur erfindungsgemäßen Zwischenschichtfolie zusammengefügt werden.

Es ist auch möglich, die Zwischenschichtfolie durch gleichzeitige Coextrusion der Teilfolien herzustellen. Die Coextrusion kann z.B. mit einer entsprechend ausgestatteten Mehrschichtdüse oder einem Feed-Block erfolgen.

Im Automobilbereich werden häufig Folien verwendet, die im oberen Bereich ein sog. Farbband aufweisen. Hierzu kann entweder der obere Teil der Folie mit einer entsprechend eingefärbten Polymerschmelze coextrudiert werden oder es kann in einem Mehrschichtsystem eine der Teilfolien eine unterschiedliche Färbung aufweisen. In der vorliegenden Erfindung ist dies durch ganz oder teilweises Einfärben zumindest einer Teilfolie realisierbar.

Die Herstellung der erfindungsgemäßen Folien bzw. Teilfolien folgt in der Regel durch Extrusion oder Coextrusion, die unter bestimmten Bedingungen (Schmelzedruck, Schmelzetemperatur und Werkzeugtemperatur) unter Erhalt einer Schmelzbruchoberfläche, d.h. einer stochastischen Oberflächenrauheit liefern.

Alternativ kann einer bereits hergestellten erfindungsgemäßen Zwischenschichtfolie durch einen Prägevorgang zwischen mindestens einem Walzenpaar eine regelmäßige, nicht stochastische Rauhigkeit aufgeprägt werden. Geprägte Folien weisen in der Regel ein verbessertes Entlüftungsverhalten bei der Verbundglasherstellung auf und werden bevorzugt im Automobilbereich eingesetzt.

Erfindungsgemäße Folien weisen unabhängig vom Herstellverfahren eine einseitig oder besonders bevorzugt beidseitig aufgebrachte Oberflächenstruktur mit einer Rauhigkeit R_{Z} von 15 bis 150 µm, bevorzugt R_{Z} von 15 bis 100 µm, besonders bevorzugt R_{Z} von 20 bis 80 µm und insbesondere R_{Z} von 40 bis 75 µm auf.

Erfindungsgemäße Folien sind auch zur Herstellung von Glas/Folie/Kunststoff-Laminaten, wie etwa zur dauerhaften Verklebung einer Glasscheibe mit einer PET-Schicht gut geeignet. Auch das Verkleben zweier Kunststoffscheiben, etwa aus Polycarbonat oder PMMA ist mit den erfindungsgemäßen Folien durchführbar.

Die erfindungsgemäßen Folien können insbesondere zur Herstellung von Verbundsicherheitsgläsern durch Laminieren mit einer oder mehreren Glasscheiben in dem Fachmann bekannter Weise verwendet werden. Die Verbundsicherheitsgläser können im Automobilbereich, z.B. als Windschutzscheibe, als auch im Architekturbereich z.B. in Fenstern oder transparenten Fassadenbauteilen oder im Möbelbau verwendet werden.

Eine weitere Verwendung der erfindungsgemäßen Folien besteht in der Herstellung von Photovoltaikmodulen.

Die prinzipielle Herstellung und Zusammensetzung von Folien auf Basis von Polyvinylacetalen ist z. B. in EP 185 863 B1, EP 1 118 258 B1 WO 02/102591 A1, EP 1 118 258 B1 oder EP 387 148 B1 beschrieben.

### Messmethoden

Die Esterzahl EZ von Polyvinylalkohol wird gemäß DIN EN ISO 3681 bestimmt. Der Hydrolysegrad HG errechnet sich aus der Esterzahl wie folgt: HG [Mol%] = 100*(100 - 0,1535*EZ)/(100-0,0749*EZ)
Die Bestimmung des Polyvinylalkohol- und Polyvinylacetatgehaltes von PVB erfolgt gemäß ASTM D 1396-92. Der Acetalysierungsgrad (= Butyralgehalt) kann als der zu Hundert fehlende Teil aus der gemäß ASTM D 1396-92 bestimmten Summe aus Polyvinylalkohol- und Polyvinylacetatgehalt berechnet werden. Die Umrechnung von Gew.% in Mol% erfolgt gemäß dem Fachmann bekannten Formeln.

Der Weichmachergehalt der Folien wird durch Lösen der Folie in Ethanol und anschließende quantitative Gaschromatographie ermittelt. Um den Weichmachergehalt der Teilfolien zu ermitteln müssen die Mehrschichtfolien nach einer Konditionierungszeit von ca. 1 Woche d.h. nach weitgehendem Abschluss der Weichmachermigration wieder getrennt und einzeln vermessen werden.

### Folienrauhigkeit:

Die Messung der Oberflächenrauhigkeit R_{Z} oder des Rauhigkeitswerts R_{Z} erfolgt nach DIN EN ISO 4287. Die angegebenen Messungen wurden mit einem Rauhigkeitsmessgerät der Fa. Mahr Typ S2, Vorschubgerät PGK mit mechanischem Einkufentaster MFW-250 durchgeführt. Die Grenzwellenlänge λ_{C}, die Gesamtmessstrecke lₘ, die Anzahl und Länge der Einzelmessstrecken lₑ und die Vorlauf- und Nachlaufstrecke lᵥ bzw. lₙ werden gemäß der o.g. Norm gewählt.

Die Bestimmung der Glasübergangstemperatur des teilacetalisierten Polyvinylalkohols erfolgt mittels Dynamischer Differenzkalorimetrie (DSC) gemäß DIN 53765 unter Verwendung einer Heizrate von 10K/min im Temperaturintervall - 50 °C - 150°C. Es wird eine erste Heizrampe, gefolgt von einer Kühlrampe, gefolgt von einer zweiten Heizrampe gefahren. Die Lage der Glasübergangstemperatur wird an der der zweiten Heizrampe zugehörigen Messkurve nach DIN 51007 ermittelt. Der DIN-Mittelpunkt (Tg DIN) ist definiert als Schnittpunkt einer Horizontalen auf halber Stufenhöhe mit der Messkurve. Die Stufenhöhe ist durch den vertikalen Abstand der beiden Schnittpunkte der Mitteltangente mit den Basislinien der Messkurve vor und nach Glasumwandlung definiert.

### Messung des Dämpfungsverhaltens

Die Dämpfungseigenschaften der Folien werden durch Messung der mechanischen Impedanz gemäß ISO/PAS 16940 (Stand 16.07.2002) bestimmt. Dazu werden die Folien zwischen zwei Glasscheiben der Dicke 2 mm laminiert und hieraus ein Probenstück mit den Abmessungen 300*25 mm ausgeschnitten. Auf diese Glasprobe wird mit Hilfe eines Cyanoacrylatklebers in der Mitte eine Klebkopfschraube (Typ UA0866/Fa. Brüel&Kjaer) aufgebracht, welche es ermöglicht, die Probe über ein Gewinde direkt mit einem Impedanzmesskopf (Typ 8001/Fa. Brüel&Kjaer GmbH) zu verbinden. Dieser ermöglicht die gleichzeitige Messung von Kraft und Beschleunigung an einem Punkt der Glasprobe über einen Frequenzbereich von 1-10000 Hz. Der Impedanzmesskopf befindet sich dabei direkt auf dem Schwingtisch eines Schwingerregers (Typ 4809/Fa. Brüel&Kjaer GmbH), über welchen die gewünschten Kräfte übertragen werden. Beide befinden sich in einem regelbaren, isolierten Heizschrank (Fa. Binder), welcher die Bestimmung der Dämpfungseigenschaften über einen Temperaturbereich von bevorzugt 0-40°C ermöglicht. Nun wird mithilfe eines Rauschsignalerzeugers (PULSE Frontend Type 3560B-040/Fa. Brüel&Kjaer GmbH), welcher zugleich auch als Signalempfänger fungiert, ein Rauschen erzeugt. Das Rauschen wird über einen Leistungsverstärker (Typ2718/Fa. Brüel&Kjaer GmbH) auf den Schwingerreger geleitet. Der Frequenzbereich umfasst dabei 0 bis 5000 Hz. Die Reaktion der Glasprobe auf die erzeugten Schwingungen kann nun bei unterschiedlichen Temperaturen direkt über den Impedanzmesskopf mittels Kraft/Beschleunigungsaufnahme gemessen und mit einer Analysensoftware (PULSE FFT Analysis Typ7770N2/Fa. Brüel&Kjaer GmbH) ausgewertet werden. Aus der ermittelten Übertragungsfunktion aus Kraft und Beschleunigung lassen sich die verschiedenen Eigenfrequenzen *f* der Schwingungsmoden n der Glasproben, sowie deren Halbwertsbreiten ermitteln. Dabei wird die Halbwertsbreite Δ*f* bei 3dB unterhalb des Signalsmaximums gewählt. Über die Beziehung *η* = Δ*f*/*f* lässt sich der Verlustfaktor *η* bzw. die Dämpfung bei den unterschiedlichen Eigenfrequenzen bestimmen. Ein hoher Verlustfaktor bzw. ein hoher prozentualer Dämpfungswert sind ein Maß für die Güte der Schalldämpfungseigenschaften. Dabei ist eine möglichst breite Dämpfungskurve im betrachteten Temperaturbereich von 0 - 40°C von Interesse.

Da die Dämpfungseigenschaften eines Materials von der Temperatur abhängt, wurden die Proben im ausgewählten Temperaturbereich in einem 5°C-Intervall gemessen, welcher im Prinzip den Anwendungsbereich des schallabsorbierenden Glases abdeckt.

### Beispiele:

### Herstellung von Polyvinylacetalen mit unterschiedlichem Restacetatgehalt

PVB 1:
   100 Gewichtsteile des Polyvinylalkohols Mowiol 28-99 (Handelsprodukt von Kuraray Europe GmbH) wurden in 1075 Gewichtsteilen Wasser unter Erwärmen auf 90 °C gelöst. Es wurden bei einer Temperatur von 40 °C 56,8 Gewichtsteile n-Butyraldehyd und bei einer Temperatur von 12 °C unter Rühren 75 Gewichtsteile 20 %ige Salzsäure zugegeben. Die Mischung wurde nach Ausfallen des Polyvinylbutyrals (PVB) auf 69°C erwärmt und bei dieser Temperatur für 2 Stunden gerührt. Das PVB wurde nach Abkühlen auf Raumtemperatur abgetrennt, mit Wasser neutral gewaschen und getrocknet. Es wurde ein PVB mit einem Polyvinylalkoholgehalt von 20,0 Gew.% (28,8 Mol%) und einem Polyvinylacetatgehalt von 1,3 Gew.% (1 Mol%) erhalten.
PVB 2:
   Die PVB-Herstellung erfolgte gemäß Beispiel 1, wobei 100 Gewichtsteile des Polyvinylalkohols Mowiol 30-92 (Handelsprodukt von Kuraray Europe GmbH) mit einem Hydrolysegrad von 93,1 Mol% und 66 Gewichtsteile n-Butyraldehyd eingesetzt wurden. Es wurde ein PVB mit einem Polyvinylalkoholgehalt von 12,7 Gew.% (19,3 Mol%) und einem Polyvinylacetatgehalt von 9,1 Gew.% (7 Mol%) erhalten.
PVB 3:
   Die PVB-Herstellung erfolgte gemäß Beispiel 1, wobei 78 Gewichtsteile n-Butyraldehyd eingesetzt wurden. Es wurde ein PVB mit einem Polyvinylalkoholgehalt von 12,5 Gew.% (18,8 Mol%) und einem Polyvinylacetatgehalt von 1,3 Gew.% (1 Mol%) erhalten.
PVB 4:
   Die PVB-Herstellung erfolgte gemäß Beispiel 1, wobei 75 Gewichtsteile n-Butyraldehyd eingesetzt wurden. Es wurde ein PVB mit einem Polyvinylalkoholgehalt von 13 Gew.% (19,4 Mol%) und einem Polyvinylacetatgehalt von 1,4 Gew.% (1,1 Mol%) erhalten.
PVB 5:
   Die PVB-Herstellung erfolgte gemäß Beispiel 2, wobei 64 Gewichtsteile n-Butyraldehyd eingesetzt wurden. Es wurde ein PVB mit einem Polyvinylalkoholgehalt von 13,1 Gew.% (19,8 Mol%) und einem Polyvinylacetatgehalt von 9 Gew.% (7 Mol%) erhalten.
PVB 6:
   Die PVB-Herstellung erfolgte gemäß Beispiel 2, wobei 65 Gewichtsteile n-Butyraldehyd eingesetzt wurden. Es wurde ein PVB mit einem Polyvinylalkoholgehalt von 12,9 Gew.% (19,5 Mol%) und einem Polyvinylacetatgehalt von 8,9 Gew.% (6,9 Mol%) erhalten.
PVB 7:
   Die PVB-Herstellung erfolgte gemäß Beispiel 2, wobei 73 Gewichtsteile n-Butyraldehyd eingesetzt wurden. Es wurde ein PVB mit einem Polyvinylalkoholgehalt von 11,6 Gew.% (17,7 Mol%) und einem Polyvinylacetatgehalt von 9,1 Gew.% (7,1 Mol%) erhalten.
PVB 8:
   Die PVB-Herstellung erfolgte gemäß PVB 7, wobei ein Mowiol 30-92 Lot mit einem Hydrolysegrad von 93,6 Mol% eingesetzt wurde. Es wurde ein PVB mit einem Polyvinylalkoholgehalt von 12,3 Gew.% (18,7 Mol%) und einem Polyvinylacetatgehalt von 8,3 Gew.% (6,5 Mol%) erhalten.
PVB 9:
   Die PVB-Herstellung erfolgte gemäß PVB 7, wobei ein Mowiol 30-92 Lot mit einem Hydrolysegrad von 94,1 Mol% eingesetzt wurde. Es wurde ein PVB mit einem Polyvinylalkoholgehalt von 13 Gew.% (19,7 Mol%) und einem Polyvinylacetatgehalt von 7,8 Gew.% (6,0 Mol%) erhalten.
PVB 10:
   Die PVB-Herstellung erfolgte gemäß PVB 7, wobei ein Mowiol 30-92 Lot mit einem Hydrolysegrad von 94,5 Mol% eingesetzt wurde. Es wurde ein PVB mit einem Polyvinylalkoholgehalt von 13,8 Gew.% (20,8 Mol%) und einem Polyvinylacetatgehalt von 7,0 Gew.% (5,4 Mol%) erhalten.

In Tabelle 1 sind die chemischen Zusammensetzungen der o.g. Polyvinylbutyrale sowie der eingesetzten Polyvinylalkohole aufgeführt.

Aus Tabelle 2 sind die ökonomischen Vorteile erkennbar, die beim Einsatz eines Polyvinylalkohols mit erniedrigtem Hydrolysegrad resultieren (höhere Ausbeute bezogen auf Polyvinylacetat, reduzierte Aldehydmenge zur Erzielung eines vergleichbaren Gehalts an OH-Gruppen des Polyvinylacetals). Mowiol ist der Handelsname für Polyvinylalkohol der Kuraray Europe GmbH, wobei die nachfolgenden Ziffern den Typ bezeichnen.

**Tabelle 1**

| PVB | Polyvinylalkoholgehalt PVB [Gew.%] | Polyvinylacetatgehalt PVB [Gew.%] | Acetalisierungsgrad (= Butyralgeh alt) [Gew.%] | Polyvinylalkoholgehalt PVB [Mol%] | Polyvinylacetatgehalt PVB [Mol%] | Acetalisierungsgrad (= Butyralgeh alt) [Mol%] |
|---|---|---|---|---|---|---|
| 1 | 20 | 1,3 | 78,7 | 28,8 | 1 | 70,2 |
| 2 | 12,7 | 9,1 | 78,2 | 19,3 | 7 | 73,7 |
| 3 | 12,5 | 1,3 | 86,2 | 18,8 | 1 | 80,2 |
| 4 | 13 | 1,4 | 85,6 | 19,4 | 1,1 | 79,5 |
| 5 | 13,1 | 9 | 77,9 | 19,8 | 7 | 73,2 |
| 6 | 12,9 | 8,9 | 78,2 | 19,5 | 6,9 | 73,6 |
| 7 | 11,6 | 9,1 | 79,3 | 17,7 | 7,1 | 75,2 |
| 8 | 12,3 | 8,3 | 79,4 | 18,7 | 6,5 | 74,8 |
| 9 | 13 | 7,8 | 79,2 | 19,7 | 6 | 74,3 |
| 10 | 13,8 | 7 | 79,2 | 20,8 | 5,4 | 73,8 |

**Tabelle 2**

| PVB | Eingesetzter Polyvinylalkohol (PVA) | Hydrolysegrad PVA [mol%] | Ausbeute PVA, bezogen auf 100 Teile Polyvinylac etat [%] | Menge Butyraldehy d [Gewichtste ile pro 100 GT PVA] | Polyvinylal koholgehalt PVB [w%] |
|---|---|---|---|---|---|
| 1 | Mowiol 28-99 | 99,2 | 51,5 | 56,8 | 20 |
| 2 | Mowiol 30-92 | 93,1 | 54,5 | 66 | 12,7 |
| 3 | Mowiol 28-99 | 99,2 | 51,5 | 78 | 12,5 |
| 4 | Mowiol 28-99 | 99,2 | 51,5 | 75 | 13 |
| 5 | Mowiol 30-92 | 93,1 | 54,5 | 64 | 13,1 |
| 6 | Mowiol 30-92 | 93,1 | 54,5 | 65 | 12,9 |
| 7 | Mowiol 30-92 | 93,1 | 54,5 | 73 | 11,6 |
| 8 | Mowiol 30-92 | 93,6 | 54,3 | 73 | 12,3 |
| 9 | Mowiol 30-92 | 94,1 | 54 | 73 | 13 |
| 10 | Mowiol 30-92 | 94,5 | 53,8 | 73 | 13,8 |

Im Rahmen dieser Erfindung wurden verschiedene Glas/Glas-Laminate hergestellt, die als Zwischenschicht die erfindungsgemäßen Folien in Form dreier zusammengelegter Teilfolien enthalten, wobei die Folien A und C im direkten Kontakt zu der Glasoberfläche stehen und die Folie B zwischen die Folien A und C laminiert ist. Tabelle 3 und 4 zeigen die Zusammensetzung der Teilfolien.

Die in den Tabellen 5 und 6 aufgeführten Beispiele enthalten die Teilfolien A und C in einer Dicke von 0,3 mm und die Teilfolie B in einer Dicke von 0,2 mm, wobei die Teilfolien durch übereinanderlegen zu einem Verbund laminiert wurden.

Aufgrund der unterschiedlichen Gehalte an Weichmacher in den Teilfolien A bzw. C und B kann es nach der Laminierung zwischen zwei Glasscheiben zu einer Weichmacherdiffusion in oder aus der Mittelschicht kommen. Der Anteil hängt dabei von der Weichmachermenge der verwendeten Teilfolie A bzw. C ab. Erwartungsgemäß findet man den größten Weichmachergehalt in der Mittelschicht (Teilfolie B) bei Verwendung der Teilfolie A1 mit 28,5 Gew. Weichmacher als Außenschicht. In Abhängigkeit von der aufgenommenen Weichmachermenge der Teilfolie B verschiebt sich das Maximum der Dämpfung, einhergehend mit einer verringerten Glasübergangstemperatur der Teilfolie B, zu niedrigeren Temperaturen. Daraus folgt, dass ein genaues Einhalten der Schichtenzusammensetzung (PVOH-Gehalt, PVAcetat-Gehalt, Weichmachergehalt) notwendig ist, um die gewünschten Dämpfungseigenschaften einzustellen. In den aufgeführten Beispielen wurden für die Teilfolien A und C die gleichen Zusammensetzungen gewählt.

Die in Tabelle 6 aufgeführten Dämpfungseigenschaften wurden gemäß ISO/PAS 16940 (Stand 16.07.2002) wie oben beschrieben bestimmt. Um möglichst gute Dämpfungseigenschaften über einen großen Temperaturbereich zu erhalten, weisen erfindungsgemäße Zwischenschichtfolien Dämpfungswerte bei 10 °C von größer als 10%, bevorzugt größer 11% und besonders bevorzugt von größer 12% auf.

**Tabelle 3**

| Teilfolie A bzw. C | PVB | Tg PVB, DIN [°C] | PVAlkoho l/Gew. % | PVAcetat /Mol% | Butyral/G ew.% | WM/Gew.% |
|---|---|---|---|---|---|---|
| A1 | 1 | 74,9 | 20 | 1 | 78,7 | 28,5 |
| A2 | 1 | 74,9 | 20 | 1 | 78,7 | 27,5 |
| A3 | 1 | 74,9 | 20 | 1 | 78,7 | 26,5 |

**Tabelle 4**

| Teilfolie B | PVB | Tg PVB, DIN [°C] | PVAlk ohol/ Gew.% | PVAcet at/Gew .% | PVAcetat /Mol% | Butyral/ Gew.% | WM/Gew. % |
|---|---|---|---|---|---|---|---|
| B1 | 2 | 65,7 | 12,7 | 9,1 | 7 | 78,2 | 37,5 |
| B2 | 3 | 68 | 12,5 | 1,3 | 1 | 86,2 | 37,5 |
| B3 | 4 | 68,8 | 13 | 1,4 | 1,1 | 85,6 | 37,5 |
| B4 | 5 | 66,2 | 13,1 | 9 | 7 | 77,9 | 37,5 |
| B5 | 6 | 66,2 | 12,9 | 8,9 | 6,9 | 78,2 | 37,5 |
| B6 | 7 | 65,2 | 11,6 | 9,1 | 7,1 | 79,3 | 37,5 |
| B7 | 8 | 65,9 | 12,3 | 8,3 | 6,5 | 79,4 | 37,5 |
| B8 | 9 | 66,3 | 13 | 7,8 | 6 | 79,2 | 37,5 |
| B9 | 10 | 66,9 | 13,8 | 7 | 5,4 | 79,2 | 37,5 |

**Tabelle 5**

| Beispiel, bzw. Vergleichsbeispiel | Schicht aufbau Teilfolien | Schichtdicke [mm] | Differenz Weichmachergehalt/Gew.% |
|---|---|---|---|
| | | A/B/A | |
| 1 (Beispiel) | A1/B1/A1 | 0,3/0,2/0,3 | 9 |
| 2a (Vergleich) | A1/B2/A1 | 0,3/0,2/0,3 | 9 |
| 2b (Vergleich) | A2/B2/A2 | 0,3/0,2/0,3 | 10 |
| 2c (Vergleich) | A3/B2/A3 | 0,3/0,2/0,3 | 11 |
| 3 (Vergleich) | A2/B3/A2 | 0,3/0,2/0,3 | 10 |
| 4 (Vergleich) | A2/B4/A2 | 0,3/0,2/0,3 | 10 |
| 5 (Beispiel) | A1/B5/A1 | 0,3/0,2/0,3 | 9 |
| 6a (Beispiel) | A1/B6/A1 | 0,3/0,2/0,3 | 9 |
| 6b (Beispiel) | A2/B6/A2 | 0,3/0,2/0,3 | 10 |
| 6c (Beispiel) | A3/B6/A3 | 0,3/0,2/0,3 | 11 |
| 7 (Beispiel) | A2/B7/A2 | 0,3/0,2/0,3 | 10 |
| 8 (Beispiel) | A2/B8/A2 | 0,3/0,2/0,3 | 10 |
| 9 (Vergleich) | A2/B9/A2 | 0,3/0,2/0,3 | 10 |

**Tabelle 6**

| Beispiel (B), Vergleic hsbeispiel (VB) | PVA c-Geh alt PVB [Mo l%] Tei lfo lie B | Dämpfung [%] der 1. Mode mit Frequenz in [Hz] bei verschiedenen Temperaturen | | | | | | | | | | WM Gew. % |
|---|---|---|---|---|---|---|---|---|---|---|---|---|
| | | [Hz] | 10°C | [Hz] | 15°C | [Hz] | 20°C | [Hz] | 25°C | [Hz] | 30°C | |
| 1 (B) | 7 | 179 | 11 | 152 | 21 | 128 | 23 | 116 | 18 | 110 | 11 | 38,2 |
| 2a (VB) | 1 | 180 | 10 | 154 | 20 | 128 | 23 | 117 | 18 | 111 | 11 | 39 |
| 2b (VB) | 1 | 186 | 8 | 161 | 18 | 137 | 23 | 123 | 19 | 114 | 13 | 38,4 |
| 2c (VB) | 1 | 190 | 7 | 173 | 15 | 141 | 23 | 123 | 22 | 116 | 15 | 37,6 |
| 3 (VB) | 1,1 | 186 | 9 | 161 | 18 | 137 | 24 | 118 | 22 | 111 | 14 | 38 |
| 4 (VB) | 7 | 182 | 10 | 161 | 19 | 134 | 25 | 118 | 21 | 110 | 13 | 37,5 |
| 5 (B) | 6, 9 | 173 | 13 | 149 | 21 | 128 | 23 | 115 | 18 | 109 | 11 | 38,2 |
| 6a (B) | 7,1 | 166 | 17 | 135 | 25 | 117 | 21 | 109 | 15 | 106 | 9 | 38,9 |
| 6b (B) | 7, 1 | 174 | 15 | 142 | 25 | 123 | 24 | 112 | 17 | 108 | 11 | 38,2 |
| 6c (B) | 7, 1 | 183 | 12 | 157 | 21 | 128 | 25 | 118 | 18 | 111 | 12 | 37,7 |
| 7 (B) | 6,5 | 185 | 9 | 160 | 19 | 131 | 24 | 119 | 18 | 110 | 12 | 38,3 |
| 8 (B) | 6 | 181 | 10 | 161 | 19 | 136 | 25 | 118 | 21 | 110 | 13 | 37,6 |
| 9 (VB) | 5,4 | 185 | 7 | 171 | 15 | 134 | 20 | 122 | 23 | 112 | 15 | 37,8 |

Wie aus den oben aufgeführten Beispielen ersichtlich, erhält man gleiche bzw. bessere Dämpfungseigenschaften mit den erfindungsgemäßen Zwischenschichtfolien, welche mindestens eine Teilfolie mit einem Acetatgehalt zwischen 5-8 mol % aufweisen im Vergleich zu den standardmäßig eingesetzten, hochverseiften Polyvinylbutyralfolien mit einem Polyvinylacetat-Gehalt von 1 Mol%. Die Beispiele 2a bis 2c und 3 stellen Vergleichsbeispiele dar.

Vergleicht man die Beispiele 1 und 2a, so zeigt sich überraschend, dass man mit Teilfolien, die einen Polyvinylacetatgehalt von 7 Mol% und einen Gehalt an Polyvinylacetal von 78,2 Gew.% aufweisen, gleiche oder bessere Dämpfungseigenschaften erhält, als mit Teilfolien, die bei entsprechend niedrigeren Polyvinylacetatgehalt von 1 Mol% mit 86,2 Gew.% Polyvinylacetalgehalt höher acetalisiert sind. Entsprechendes gilt für den Vergleich von Beispiel 2a und Beispiel 5.

Die resultierenden Vorteile im Rahmen dieser Erfindung sind die niedrigeren Kosten des als Rohstoff eingesetzten Polyvinylalkohols sowie der geringere Verbrauch von Butyraldehyd zum Herstellen der Zwischenschichtfolien mit höherem Polyvinylacetatgehalt von 5-8 mol%.

Im Vergleich von Beispiel 1 und 2a bzw. Beispiel 2a und Beispiel 5 ergibt sich eine Einsparung von ca. 8 Gewichtsteilen Butyraldehyd pro 100 Gewichtsteilen Polyvinylalkohol. Entsprechendes ergibt sich aus dem Vergleich von Beispiel 3 und Beispiel 4, die einen fast gleichen Anteil in Gew.% an Polyvinylalkoholgruppen aufweisen.

## Patentansprüche

1. Zwischenschichtfolie für Verbundverglasungen, aufgebaut aus mindestens zwei Teilfolien basierend auf weichmacherhaltigem Polyvinylbutyral, **dadurch gekennzeichnet, dass** eine erste Teilfolie ein Polyvinylbutyral mit einem Anteil an Polyvinylacetatgruppen von 0,1 bis 11 Mol% und einem Anteil an Polyvinylalkoholgruppen von 17 bis 22 Gew.% und eine zweite Teilfolie ein Polyvinylbutyral mit einem Anteil an Polyvinylacetatgruppen zwischen 5 und 8 Mol% und einem Anteil an Polyvinylalkoholgruppen von 11,5 bis 13 Gew.% enthält.

2. Zwischenschichtfolie nach Anspruch 1, **dadurch gekennzeichnet, dass** die Teilfolien einen um mindestens 5 Gew. % unterschiedlichen Weichmacheranteil aufweisen.

3. Zwischenschichtfolie nach Anspruch 1 oder 2, **dadurch gekennzeichnet, dass** mindestens eine der Teilfolien 0,001 bis 20 Gew.% SiO₂ enthält.

4. Zwischenschichtfolie nach einem der Ansprüche 1 bis 3, **dadurch gekennzeichnet, dass** die Zwischenschichtfolie durch Coextrusion der Teilfolien hergestellt wird.

5. Zwischenschichtfolie nach einem der Ansprüche 1 bis 4, **dadurch gekennzeichnet, dass** mindestens eine Teilfolie ganz oder teilweise eingefärbt ist.

6. Zwischenschichtfolie nach einem der Ansprüche 1 bis 5, **dadurch gekennzeichnet, dass** ein mit der Zwischenschichtfolie hergestellter Probenkörper aus 2 mm Glas/0,8 mm Zwischenschichtfolie/ 2 mm Glas gemäß ISO/PAS 16940 (Stand 16.7.2002) für die 1. Mode Dämpfungswerte im Temperaturbereich von 17,5-22,5°C von über 22% aufweist.

7. Zwischenschichtfolie nach einem der Ansprüche 1 bis 6, **dadurch gekennzeichnet, dass** ein mit der Zwischenschichtfolie aus 2 mm Glas/0,8 mm Zwischenschichtfolie/ 2 mm Glas gemäß ISO/PAS 16940 (Stand 16.7.2002) für die 1. Mode Dämpfungswerte bei 10 °C von über 10 % aufweist.

8. Verwendung der Zwischenschichtfolie nach einem der Ansprüche 1 bis 7 im Automobilbereich, in Windschutzscheiben, im Architekturbereich, in Fassadenbauteilen oder zur Herstellung von Photovoltaikmodulen.

## Claims

1. An interlayer film for laminated glazing, constructed from at least two interlayer films based on plasticizer-containing polyvinyl butyral, **characterized in that** a first interlayer film contains a polyvinyl butyral with a proportion of polyvinyl acetate groups of 0.1 to 11 mol % and a proportion of polyvinyl alcohol groups of 17 to 22% by weight, and a second interlayer film contains a polyvinyl butyral with a proportion of polyvinyl acetate groups of between 5 and 8 mol % and a proportion of polyvinyl alcohol groups of 11.5 to 13% by weight.

2. The interlayer film as claimed in claim 1, **characterized in that** the proportion of plasticizer in the interlayer films differs by at least 5% by weight.

3. The interlayer film as claimed in claim 1 or claim 2, **characterized in that** at least one of the interlayer films contains 0.001 to 20% by weight of SiO₂.

4. The interlayer film as claimed in one of claims 1 to 3, **characterized in that** the interlayer film is produced by co-extrusion of the interlayer films.

5. The interlayer film as claimed in one of claims 1 to 4, **characterized in that** at least one of the interlayer films is completely or partially pigmented.

6. The interlayer film as claimed in one of claims 1 to 5, **characterized in that** a test piece of 2 mm glass/0.8 mm interlayer film/2 mm glass produced with the interlayer film has a first mode damping coefficient in accordance with ISO/PAS 16940 (as at 16.07.2002) of more than 22% in the temperature range of 17.5-22.5°C.

7. The interlayer film as claimed in one of claims 1 to 6, **characterized in that** a test piece of 2 mm glass/0.8 mm interlayer film/2 mm glass produced with the interlayer film has a first mode damping coefficient in accordance with ISO/PAS 16940 (as at 16.07.2002) of more than 10% at 10°C.

8. Use of the interlayer film as claimed in one of claims 1 to 7 in the automotive sector, in windscreens, in the architectural sector, in facade components or for the production of photovoltaic modules.

## Revendications

1. Film intercalaire pour vitrages feuilletés, constitué d'au moins deux films partiels à base de poly(butyral de vinyle) contenant des plastifiants, **caractérisé en ce qu'**un premier film partiel contient un poly(butyral de vinyle) ayant une proportion de groupes de poly(acétate de vinyle) comprise entre 0,1 et 11 % en mole et une proportion de groupes de poly(alcool de vinyle) comprise entre 17 et 22 % en poids et un deuxième film partiel contient un poly(butyral de vinyle) ayant une proportion de groupes de poly(acétate de vinyle) comprise entre 5 et 8 % en mole et une proportion de groupes de poly (alcool de vinyle) comprise entre 11,5 et 13 % en poids.

2. Film intercalaire selon la revendication 1, **caractérisé en ce que** les films partiels présentent des proportions de plastifiants dont la différence est supérieure ou égale 5 % en poids.

3. Film intercalaire selon les revendications 1 ou 2, **caractérisé en ce qu'**au moins un des film partiels contient 0,001 à 20 % en poids de SiO₂.

4. Film intercalaire selon l'une des revendications 1 à 3, **caractérisé en ce que** le film intercalaire est fabriqué par co-extrusion desdits films partiels.

5. Film intercalaire selon l'une des revendications 1 à 4, **caractérisé en ce qu'**au moins un film partiel est totalement ou partiellement coloré.

6. Film intercalaire selon l'une des revendications 1 à 5, **caractérisé en ce qu'**un échantillon, lequel est fabriqué en mettant en œuvre ledit film intercalaire et lequel est constitué de 2 mm de verre / 0,8 mm de film intercalaire / 2 mm de verre selon ISO/PAS 16940 (dans sa version du 16/07/2002), présente dans une gamme de températures comprise entre 17,5 et 22,5 °C, selon le 1^{er} mode, des valeurs d'affaiblissement acoustique supérieures à 22 %.

7. Film intercalaire selon l'une des revendications 1 à 6, **caractérisé en ce qu'**un échantillon, lequel est fabriqué en mettant en œuvre ledit film intercalaire et lequel est constitué de 2 mm de verre / 0,8 mm de film intercalaire / 2 mm de verre selon ISO/PAS 16940 (dans sa version du 16/07/2002), présente à 10 °C, selon le 1^{er} mode, des valeurs d'affaiblissement acoustique supérieures à 10 %.

8. Utilisation du film intercalaire selon l'une des revendications 1 à 7 dans le secteur automobile, dans des pare-brise, dans l'architecture, dans des éléments de façade ou pour fabriquer des modules photovoltaïques.
